# EUROPEAN PATENT SPECIFICATION

(11) **EP 3 150 867 B1**
(45) Date of publication and mention of the grant of the patent: **27.03.2019**
(21) Application number: 15197240.3
(22) Date of filing: 01.12.2015
(51) Int. Cl.: F16B 23/00, B25B 13/06

(54) **RECESSED HEAD SCREW**
SCHLITZSCHRAUBE
VIS À TÊTE FRAISÉE

(43) Date of publication of application: 05.04.2017
(73) Proprietor: Hsu, Hung-I, Kaohsiung City 822 (TW)
(72) Inventor: Hsu, Hung-I, Kaohsiung City 822 (TW)
(74) Representative: Cabinet Chaillot

(56) References cited:
- WO-A1-01/85043
- DE-A1- 19 836 572
- US-A- 4 258 596
- US-A1- 2007 212 190

## Description

### BACKGROUND OF THE INVENTION

### 1. Field of the Invention

This invention relates to a screw and relates particularly to a recessed head screw capable of engaging a driving tool firmly.

### 2. Description of the Related Art

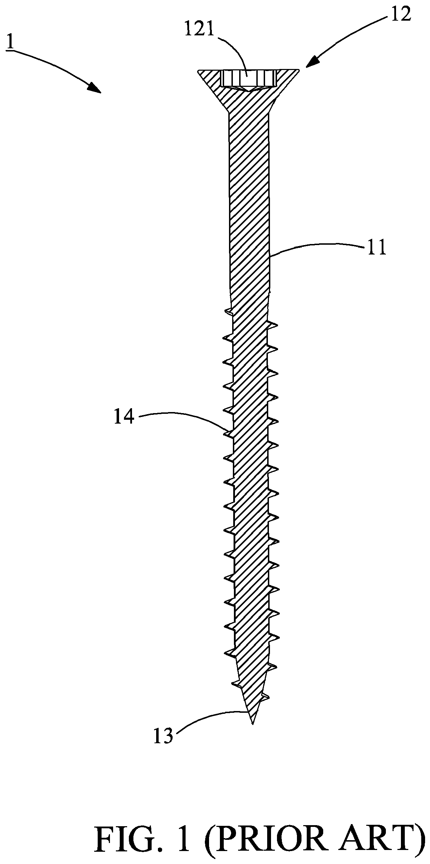

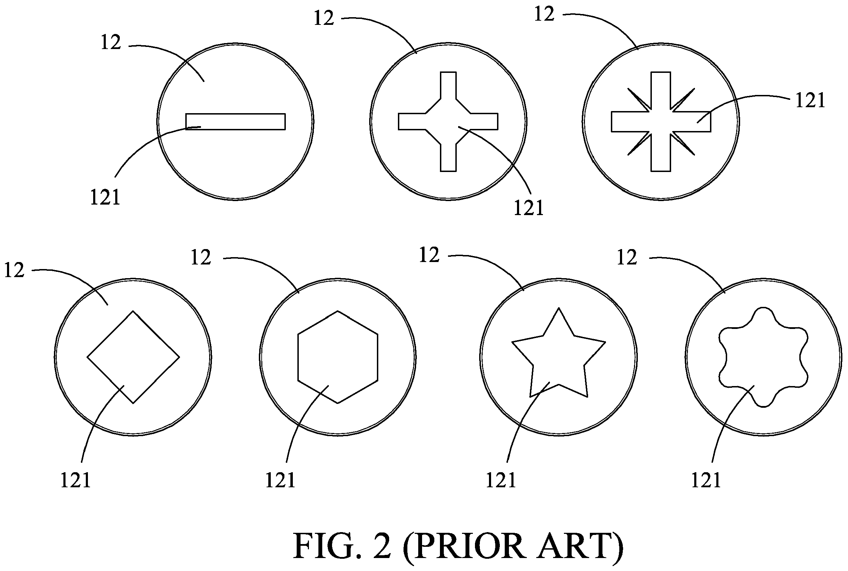

Referring to Fig. **1****,** a conventional screw **1** includes a shank **11,** a head **12** disposed at one end of the shank **11,** a drilling portion **13** disposed at the other end of the shank **11** and a plurality of threads **14** spirally disposed on the shank **11.** The head **12** has a driving socket **121** formed thereon. The driving socket **121,** shown in Fig. **2****,** can be a slotted socket, a cruciform socket, a Pozi socket, a square socket, a hexagonal socket, a star-shaped socket, a Torx socket or other sockets. A driving tool (not shown) engages the driving socket **121** for rotating the screw **1** and drilling the threads **14** into an object (not shown).

For the sake of easy insertion of the driving tool, a dimension of a lower part of the driving tool is slightly less than a bore diameter of the driving socket **121.** Therefore, the driving tool and the driving socket **121** are in loose engagement, namely the driving tool does not engage the driving socket **121** closely. However, such structure renders the driving socket **121** unable to receive a full driving force from the driving tool, so the screw **1** cannot be completely driven. Further, when the driving tool works, the driving tool may escape from the driving socket **121** even though the screw **1** does not drop down from the tool at the time of operating the driving tool whose drilling portion **13** is set above the object to execute a downward operation which exerts a downward driving force on the head **12.** If the driving tool is set below the object to provide an upward operation which gives the head **12** an upward driving force, the loose engagement between the driving tool and the driving socket **121** causes the screw **1** to fall off the driving tool easily and renders the operation unable to work smoothly.

If the driving socket **121** is a slotted socket, a cruciform socket or a Pozi socket, the driving socket **121** usually has slanting walls. The driving tool may slip out of the driving socket **121** easily because the driving tool is subjected to the loose engagement and the slanting walls. Thus, the driving tool cannot deliver a driving force to the screw **1** efficiently. It is also noted that the user has to hold the driving tool with one hand and hold the screw **1** with the other hand in order to drive the screw **1,** regardless of the direction of the driving force. This action generally brings about difficulty in using the driving tool.

To solve the aforementioned problems, a conventional driving tool having the magnetic force has been invented to allow the driving tool to attract the head **12** of the screw **1** for engagement. However, there is a large amount of iron debris during the process of manufacturing large numbers of screw products, so some iron debris may be left within the driving socket **121.** However, if the driving tool attracts the iron debris left in the driving socket **121** in the long term, the magnetic force of the driving tool may be reduced, and the reduced magnetic force may also render the driving socket **121** of the screw **1** unable to be driven by the driving tool efficiently. Thus, the working efficiency is still reduced. US 4 258 596 A discloses a recessed head screw according to the preamble of claim 1.

### SUMMARY OF THE INVENTION

An object of this invention is to provide a recessed head screw which snugly engages different kinds of driving tools to prevent the driving recess of the screw from being broken and to prevent the screw from dropping down from the driving tool easily.

The recessed head screw of this invention is as defined in claim 1. When the driving tool is inserted into the driving recess which can be in various shapes, the driving socket punched by precision processing and located between the driving recess and the top face can snugly engage the driving tool to increase the engagement of the driving tool with the socket portion. The increase in the engagement prevents the driving tool from escaping from the driving socket and prevents the screw from dropping down from the driving tool easily. Thus, a full driving force of the driving tool can be delivered to the head efficiently and evenly to facilitate the fastening work. The walls of the driving recess are not easily broken by the driving tool because of this even delivery action, thereby improving the working efficiency and promoting the smoothness of the operation.

Preferably, the driving tool has a shaft portion and an insertion portion connected thereto. The shaft portion and the driving socket are in close-fitting engagement when the insertion portion is inserted into the driving recess.

Preferably, the driving recess can be a slotted recess, a cruciform recess, a Pozi recess, a triangular recess, a square recess, a star-shaped recess, a Torx recess, a polygonal recess, or other suitable shapes.

Preferably, a depth value of the driving socket is at least 15% of the maximum circumscribed circle diameter value of the driving recess.

The advantages of this invention are more apparent upon reading following descriptions in conjunction with accompanying drawings.

### BRIEF DESCRIPTION OF THE DRAWINGS

Fig. 1 is a schematic view showing a conventional recessed screw;
Fig. 2 shows top plan views of universal driving sockets of the conventional recessed screw;
Fig. 3 is a perspective view showing a first preferred embodiment of this invention;
Fig. 4 is a cross-sectional view showing the head of the first preferred embodiment;
Fig. 5 shows top plan views of heads of the first preferred embodiment having different driving recesses;
Fig. 6 is a schematic view showing the use of the first preferred embodiment; and
Fig. 7 is a cross-sectional view showing a second preferred embodiment of this invention.

### DETAILED DESCRIPTION OF THE PREFERRED EMBODIMENTS

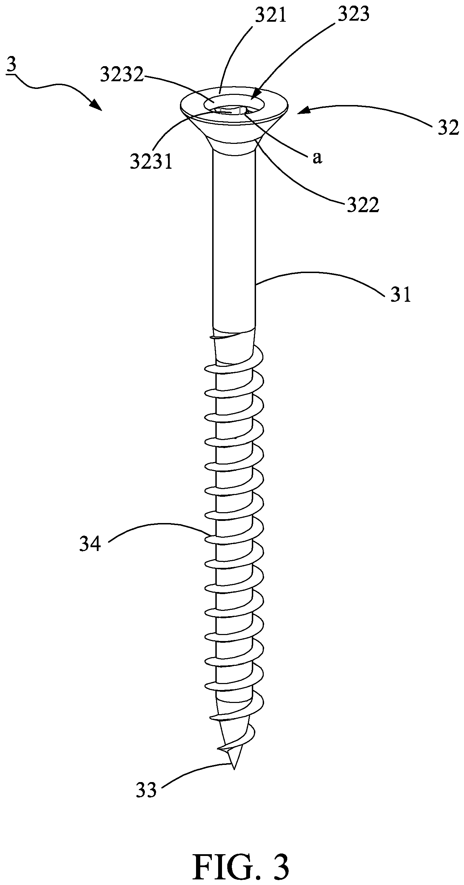

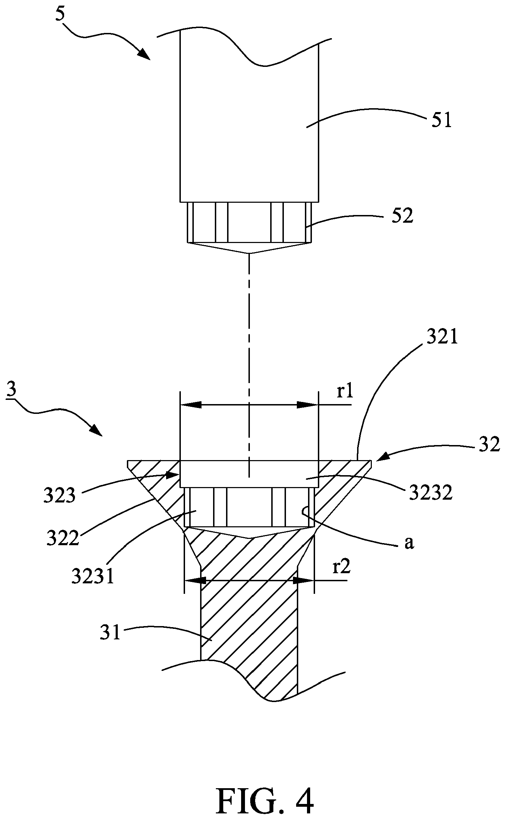

Referring to Fig. **3** and Fig. **4****,** a recessed head screw **3** of a first preferred embodiment of this invention includes a shank **31,** a head **32** disposed at one end of the shank **31,** a drilling portion **33** disposed at another end of the shank **31,** and a plurality of threads **34** spirally disposed on the shank **31.** The head **32** includes a top face **321** and a bottom face **322** connected between the top face **321** and the shank **31.** The top face **321** has a socket portion **323** formed thereon for engaging a driving tool **5**. Herein, the driving **tool 5** has a shaft portion **51** and an insertion portion **52** connected to the shaft portion **51** for engaging the socket portion **323.**

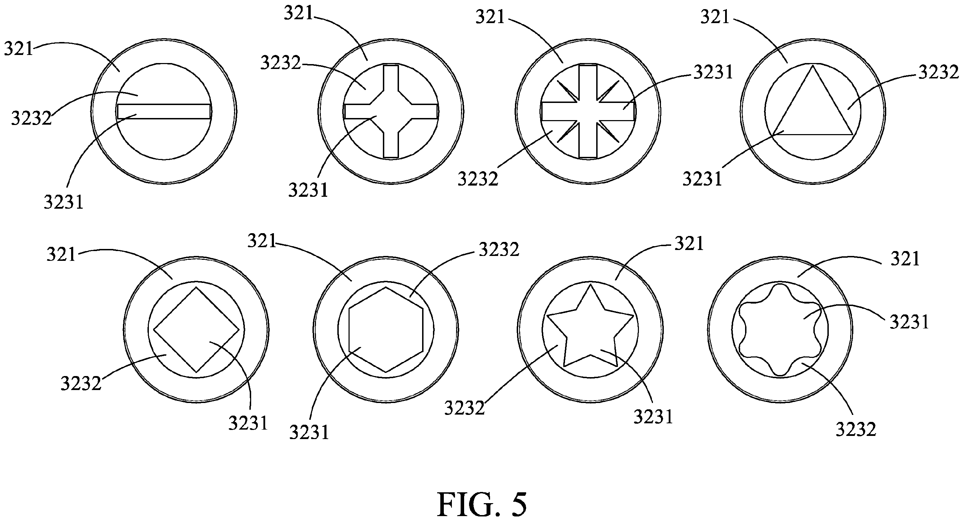

The socket portion **323** has a driving recess **3231** formed therein and a driving socket **3232** formed between the driving recess **3231** and the top face **321.** The driving recess **3231** is enclosed by a plurality of interconnected walls **"a"** so that the driving recess **3231** can have different shapes for adapting to different kinds of driving tools. When the insertion portion **52** of the driving **tool 5** is inserted into the driving recess **3231,** the shaft portion **51** of the driving tool **5** can be in close-fitting engagement with the driving socket **3232.** The insertion portion **52** can be in loose or close-fitting engagement with the driving recess **3231** according to the shape and dimension of the insertion portion **52.** In this preferred embodiment, it is adopted as an example that when the shaft portion **51** and the driving socket **3232** fit snugly to be in close-fitting engagement, the insertion portion **52** is in loose engagement with the driving recess **3231** to facilitate an easy entry or withdrawal of the driving tool **5.** In addition, the driving socket **3232** may be in different shapes, preferably a circular shape in this preferred embodiment. The driving recess **3231,** as shown in Fig. **5****.** can be a slotted recess, a cruciform recess, a Pozi recess, a triangular recess, a square recess, a star-shaped recess, a Torx recess, a polygonal recess which contains at least five walls, etc. Thus, the socket portion **323** can cooperate with different kinds of driving tool. The driving socket **3232** communicates with the driving recess **3231.** Further, the driving socket **3232** can be preferably punched and formed by precision processing. Specifically, a diameter value **r1** of the driving socket **3232** is a maximum circumscribed circle diameter value **r2** of the driving recess **3231** plus a value within 20% of the maximum circumscribed circle diameter value **r2.** In other words, the diameter value **r1** of the driving socket **3232** is within 120% of the maximum circumscribed circle diameter value **r2** of the driving recess **3231.** Thus, a maximum of the diameter value **r1** is 1.2 times the maximum circumscribed circle diameter value **r2.** It is also possible that when the value **r1** is the value **r2** plus 0% of the value **r2,** the diameter value **r1** is equal to the maximum circumscribed circle diameter value **r2,** namely the value **r1** is 1 times the value **r2.** Accordingly, if the driving socket **3232** is precisely processed and punched by the limitation as aforementioned, the engagement between the driving tool **5** and the socket portion **323** can be enhanced when the insertion portion **52** of the driving tool **5** enters the driving recess **3231.** Further, the driving socket **3232** can fit in close engagement with the shaft portion **51** to prevent the driving **tool 5** from escaping from or slipping out of the socket portion **323.**

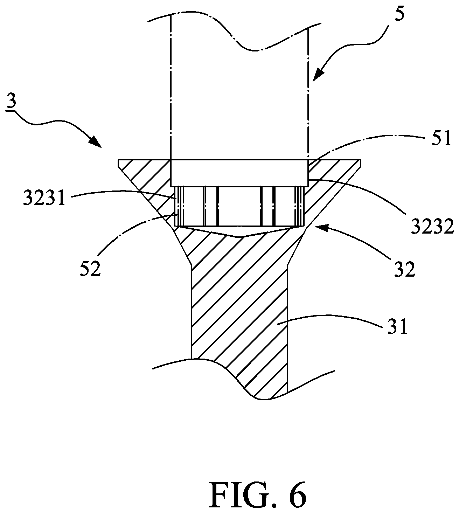

The operation is described with the aid of Fig. **3** and Fig. **6****.** Before giving a driving force, a driving **tool 5** is inserted into the socket portion **323** of the head **32** to make the insertion portion **52** touch the walls **"a"** of the driving recess **3231.** Because the insertion portion **52** may be set to provide a size slightly smaller than the size of the driving recess **3231** for the sake of easy entry, there is appropriate space left between the insertion portion **52** and the walls **"a"** so that the insertion portion **52** can be in loose engagement with the driving recess **3231.** Concurrently, because the driving socket **3232** formed between the top face **321** and the driving recess **3231** and punched by precision processing, the shaft portion **51** can fit snugly with the driving socket **3232,** namely the shaft portion **51** is in close-fitting engagement with the driving socket **3232.** On the whole, the engagement between the driving **tool 5** and the socket portion **323** is largely increased to attain a firm engagement. Thus, the full driving force **5** created by the driving **tool 5** can be delivered to the head **32** efficiently and evenly. This firm and even behavior not only prevents the driving **tool 5** from breaking the walls **"a"** of the driving recess **3231** but also prevents the driving **tool 5** from slipping out of the socket portion **323.** Thus, the screw **3** driven by the driving tool **5** does not fall off the driving **tool 5** easily during the driving operation to obtain a complete driving work. If the user uses the driving tool **5** at a high altitude and gives the screw **3** an upward driving force, the screw **3** does not fall or drop down easily as the screw **3** still engages the driving tool **5** firmly. Thus, the screw **3** can provide a complete fastening operation to improve the working efficiency and the smoothness of the operation.

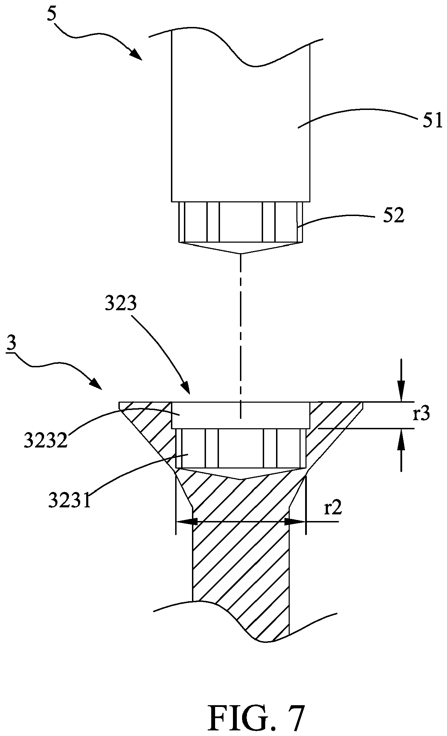

Referring to Fig. **7****,** a recessed head screw **3** of a second preferred embodiment and that of the first preferred embodiment have the same elements, which are herein omitted. The second preferred embodiment is characterized in that a depth value **r3** of the driving socket **3232** is at least 15% of the maximum circumscribed circle diameter value **r2** of the driving recess **3231.** When the driving **tool 5** engages the socket portion **323,** the depth value **r3** which is at least 15% of the maximum circumscribed circle diameter value **r2** helps increase the area where the driving socket **3232** of the screw **3** engages the shaft portion **51** of the driving **tool 5** in order to enhance the close-fitting engagement therebetween. Thus, the driving tool **5** engages the driving socket **3232** firmly to prevent the swaying movement of the tool **5**, prevent the slipping of the **tool 5** out of engagement with the screw **3,** and solve the falling problem of the screw **3.** The enhanced engagement also helps deliver the driving force of the driving tool **5** to every wall **"a"** of the driving recess **3231** to attain an efficient and even driving operation whereby the walls **"a"** are not broken easily. Therefore, the working efficiency and smoothness can be improved and enhanced.

To sum up, the recessed head screw takes advantage of a driving recess formed in the head and a driving socket in communication with the driving recess formed between the driving recess and a top face of the head to provide a close-fitting engagement between a driving tool and the driving socket which can be punched by precision processing when the driving tool enters the driving recess. This invention increases and enhances the engagement of the driving tool with the socket portion and prevents the driving tool from escaping from the driving socket. The screw does not drop down from the driving tool easily during the driving action. Thus, the full driving force of the driving tool can be delivered to the head evenly to facilitate the fastening operation and improve the working efficiency and the smoothness of the operation.

While the embodiment of this invention is shown and described, it is understood that further variations and modifications may be made without departing from the scope of this invention.

## Claims

1. A recessed head screw (3) comprising a shank (31), a head (32) disposed at one end of said shank (31), and a plurality of threads (34) spirally disposed on said shank (31), said head (32) including a top face (321) and a bottom face (322) connected between said top face (321) and said shank (31), said top face (321) having a socket portion (323) formed thereon suitable for engaging a driving tool (5) ;
wherein said socket portion (323) has a driving recess (3231), with a converged point, formed therein and a driving socket (3232) formed between said driving recess (3231) and said top face (321), said driving socket (3232) communicating with said driving recess (3231), said driving recess (3231) having a driving recess depth and said driving socket (3232) having a driving socket depth (r3),
**characterized in that**:
a drilling portion (33) is disposed at another end of said shank (31); and
said driving recess (3231) is enclosed by a plurality of interconnected walls (a) extending from the converged point to said driving socket (3232) and defining said driving recess depth, said driving socket (3232) defining a peripheral wall extending from said interconnected walls (a) of said driving recess (3231) to said top face (321) and defining said driving socket depth (r3) for being in close-fitting engagement with a partial wall portion of said driving tool (5), with a shape enclosed by the peripheral wall of said driving socket (3232) being different than a shape enclosed by the plurality of interconnected walls (a) of said driving recess (3231), said driving socket depth (r3) being smaller than said driving recess depth, said driving socket (3232) having a circumscribed circle diameter value (r1) greater than a maximum circumscribed circle diameter value (r2) of said driving recess (3231) and less than or equal to 1.2 times the maximum circumscribed circle diameter value (r2) of said driving recess (3231).

2. The recessed head screw (3) as claimed in claim 1, wherein said driving recess (3231) is a slotted recess, a cruciform recess, a Pozi recess, a triangular recess, a square recess, a star-shaped recess, a Torx recess, or a polygonal recess.

3. The recessed head screw (3) as claimed in any of claims 1 to 2, wherein the driving socket depth (r3) is at least 0.15 times said maximum circumscribed circle diameter value (r2) of said driving recess (3231).

4. The recessed head screw (3) as claimed in claim 1, wherein said circumscribed circle diameter value (r1) of said driving socket (3232) is 1.2 times the maximum circumscribed circle diameter value (r2) of said driving recess (3231).

5. A combination of the recessed head screw (3) as claimed in any of claims 1 to 4 and of a driving tool (5), wherein said driving tool (5) has a shaft portion (51) and an insertion portion (52) connected to said shaft portion (51), said shaft portion (51) and said driving socket (3232) being in close-fitting engagement when said insertion portion (52) is inserted into said driving recess (3231).

## Patentansprüche

1. Senkkopfschraube (3), umfassend einen Schaft (31), einen Kopf (32), der an einem Ende des Schafts (31) angeordnet ist, und eine Vielzahl von Gewinden (34), die spiralförmig auf dem Schaft (31) angeordnet sind, wobei der Kopf (32) eine obere Seite (321) und eine untere Seite (322) einschließt, die zwischen der oberen Seite (321) und dem Schaft (31) verbunden ist, wobei die obere Seite (321) einen Sockelabschnitt (323) aufweist, der darauf gebildet ist, geeignet, um ein Eindrehwerkzeug (5) einzugreifen,
wobei der Sockelabschnitt (323) eine Eindrehaussparung (3231) aufweist, mit einem konvergierten Punkt, der darin gebildet ist, und einem Eindrehsockel (3232), der zwischen der Eindrehsaussparung (3231) und der oberen Seite (321) gebildet ist, wobei der Eindrehssockel (3232) mit der Eindrehsaussparung (3231) kommuniziert, wobei die Eindrehsaussparung (3231) eine Eindrehsaussparungstiefe aufweist und der Eindrehssockel (3232) eine Eindrehssockeltiefe (r3) aufweist,
**dadurch gekennzeichnet, dass**:
ein Bohrabschnitt (33) an einem anderen Ende des Schafts (31) angeordnet ist; und
die Eindrehsaussparung (3231) durch eine Vielzahl von miteinander verbundenen Wänden (a) eingeschlossen ist, die sich vom konvergierenden Punkt zu dem Eindrehssockel (3232) erstrecken und die Eindrehsaussparungstiefe definieren, wobei der Eindrehssockel (3232) eine periphere Wand definiert, die sich von den miteinander verbundenen Wänden (a) der Eindrehsaussparung (3231) zu der oberen Seite (321) erstreckt und die Eindrehsaussparungstiefe (r3) definiert, um in engpassendem Eingriff mit einem partiellen Wandabschnitt des Eindrehswerkzeugs (5) zu sein, wobei eine Form, die von der peripheren Wand des Eindrehssockels (3232) eingeschlossen ist, verschieden von einer Form ist, die von der Vielzahl von miteinander verbundenen Wänden (a) der Eindrehsaussparung (3231) eingeschlossen ist, wobei die Eindrehssockeltiefe (r3) kleiner als die Eindrehsaussparungstiefe ist, wobei der Eindrehssockel (3232) einen umgebenden Kreisdurchmesserwert (r1) aufweist, der größer als ein maximaler umgebender Kreisdurchmesserwert (r2) der Eindrehsaussparung (3231) und kleiner oder gleich 1,2 Mal der maximale umgebende Kreisdurchmesserwert (r2) der Eindrehsaussparung (3231) ist.

2. Senkkopfschraube (3) nach Anspruch 1, wobei die Eindrehsaussparung (3231) eine geschlitzte Aussparung, eine kreuzförmige Aussparung, eine Pozi-Aussparung, eine dreieckige Aussparung, eine quadratische Aussparung, eine sternförmige Aussparung, eine Torx-Aussparung oder eine polygonale Aussparung ist.

3. Senkkopfschraube (3) nach einem der Ansprüche 1 bis 2, wobei die Eindrehssockeltiefe (r3) mindestens 0,15 Mal der maximale umgebende Kreisdurchmesserwert (r2) der Eindrehaussparung (3231) ist.

4. Senkkopfschraube (3) nach Anspruch 1, wobei der umgebende Kreisdurchmesserwert (r1) des Eindrehssockels (3232) 1,2 Mal der maximale umgebende Kreisdurchmesserwert (r2) der Eindrehsaussparung (3231) ist.

5. Kombination der Senkkopfschraube (3) wie in einem der Ansprüche 1 bis 4, und eines Eindrehswerkzeugs (5), wobei das Eindrehswerkzeug (5) einen Schaftabschnitt (51) und einen Einführungsabschnitt (52) aufweist, der mit dem Schaftabschnitt (51) verbunden ist, wobei der Schaftabschnitt (51) und der Eindrehssockel (3232) in engpassendem Eingriff sind, wenn der Einführungsabschnitt (52) in die Eindrehsaussparung (3231) eingeführt ist.

## Revendications

1. Vis à tête fraisée (3) comprenant une tige (31), une tête (32) disposée à une extrémité de ladite tige (31), et une pluralité de filets (34) disposés en spirale sur ladite tige (31), ladite tête (32) comprenant une face supérieure (321) et une face inférieure (322) reliée entre ladite face supérieure (321) et ladite tige (31), ladite face supérieure (321) ayant une partie cavité (323), formée sur celle-ci, appropriée pour engager un outil d'entraînement (5) ;
ladite partie cavité (323) ayant un renfoncement d'entraînement (3231), avec un point de convergence, formé à l'intérieur de celle-ci et une cavité d'entraînement (3232) formée entre ledit renfoncement d'entraînement (3231) et ladite face supérieure (321), ladite cavité d'entraînement (3232) communiquant avec ledit renfoncement d'entraînement (3231), ledit renfoncement d'entraînement (3231) ayant une profondeur de renfoncement d'entraînement et ladite cavité d'entraînement (3232) ayant une profondeur de cavité d'entraînement (r3),
**caractérisée par le fait que** :
une partie de perçage (33) est disposée à une autre extrémité de ladite tige (31) ; et
ledit renfoncement d'entraînement (3231) est entouré par une pluralité de parois interconnectées (a) s'étendant du point de convergence à ladite cavité d'entraînement (3232) et définissant ladite profondeur de renfoncement d'entraînement, ladite cavité d'entraînement (3232) définissant une paroi périphérique s'étendant desdites parois interconnectées (a) dudit renfoncement d'entraînement (3231) à ladite face supérieure (321) et définissant ladite profondeur de cavité d'entraînement (r3) pour qu'elle soit en engagement ajusté avec une partie de paroi partielle dudit outil d'entraînement (5), une forme entourée par la paroi périphérique de ladite cavité d'entraînement (3232) étant différente d'une forme entourée par la pluralité de parois interconnectées (a) dudit renfoncement d'entraînement (3231), ladite profondeur de cavité d'entraînement (r3) étant plus petite que ladite profondeur de renfoncement d'entraînement, ladite cavité d'entraînement (3232) ayant une valeur de diamètre de cercle circonscrit (r1) supérieure à une valeur de diamètre de cercle circonscrit maximale (r2) dudit renfoncement d'entraînement (3231) et inférieure ou égale à 1,2 fois la valeur de diamètre de cercle circonscrit maximale (r2) dudit renfoncement d'entraînement (3231).

2. Vis à tête fraisée (3) selon la revendication 1, dans laquelle ledit renfoncement d'entraînement (3231) est un renfoncement en fente, un renfoncement cruciforme, un renfoncement Pozi, un renfoncement triangulaire, un renfoncement carré, un renfoncement en forme d'étoile, un renfoncement Torx ou un renfoncement polygonal.

3. Vis à tête fraisée (3) selon l'une quelconque des revendications 1 à 2, dans laquelle la profondeur de cavité d'entraînement (r3) est au moins 0,15 fois ladite valeur de diamètre de cercle circonscrit maximale (r2) dudit renfoncement d'entraînement (3231).

4. Vis à tête fraisée (3) selon la revendication 1, dans laquelle ladite valeur de diamètre de cercle circonscrit (r1) de ladite cavité d'entraînement (3232) est 1,2 fois la valeur de diamètre de cercle circonscrit maximale (r2) dudit renfoncement d'entraînement (3231).

5. Combinaison de la vis à tête fraisée (3) selon l'une quelconque des revendications 1 à 4 et d'un outil d'entraînement (5), dans laquelle ledit outil d'entraînement (5) a une partie tige (51) et une partie d'introduction (52) reliée à ladite partie tige (51), ladite partie tige (51) et ladite cavité d'entraînement (3232) étant en engagement ajusté lorsque ladite partie d'introduction (52) est introduite dans ladite fraise d'entraînement (3231).
